# FASCICULE DE BREVET EUROPEEN

(11) **EP 0 591 045 B1**
(45) Date de publication et mention de la délivrance du brevet: **14.05.1997**
(21) Numéro de dépôt: 93402371.4
(22) Date de dépôt: 28.09.1993
(51) Int. Cl.: G01G 17/04

(54) **Procédé et installation de chargement d'un récipient en air liquide**
Verfahren und Vorrichtung zum Füllen eines Behälters mit flüssiger Luft
Method and installation for filling a container with liquid air

(30) Priorité: 02.10.1992 FR 9211658
(43) Date de publication de la demande: 06.04.1994
(73) Titulaire: INTERTECHNIQUE, F-78370 Plaisir (FR)
(72) Inventeur: Schegerin, Robert, F-78350 Jouy en Josas (FR)
(74) Mandataire: Fort, Jacques

(56) Documents cités:
- FR-A- 2 554 230
- FR-A- 2 561 385
- PATENT ABSTRACTS OF JAPAN vol. 9, no. 68 (P-344)(1791) 28 Mars 1985 & JP-A-59 202 030 (MITSUBISHI JUKOGYO K.K.) 15 Novembre 1984

## Description

Il existe de plus en plus d'applications pour lesquelles il est nécessaire de disposer d'un convertisseur contenant de l'air liquide, ce terme devant être interprété comme désignant une phase liquide contenant de l'oxygène et de l'azote en proportions relatives proches de celles que ces gaz ont dans l'atmosphère.

A titre d'exemple d'application, on peut citer les appareils individuels de survie ou de travail en atmosphère toxique ou contaminée, où le convertisseur d'air liquide fournit le gaz respiratoire nécessaire (et peut au surplus constituer une source de frigories). Ce gaz est à utiliser en l'état car il n'est alors pas possible de prélever de l'air extérieur pour diluer de l'oxygène provenant d'un convertisseur initialement chargé en oxygène liquide.

Les procédés industriels de liquéfaction des gaz fournissent d'une part de l'oxygène liquide, d'autre part de l'azote liquide. Il semble à première vue aisé de constituer de l'air liquide par mélange de ces deux fluides. En pratique, on se heurte à de graves difficultés. Le liquide obtenu, qui se rapproche plus d'une dissolution d'un gaz liquide dans l'autre que d'un simple mélange, est instable du fait de la plus grande volatilité de l'azote, qui provoque une augmentation relativement rapide de la concentration en oxygène de la phase liquide. Les tentatives qui ont été faites pour disposer d'une réserve importante d'air liquide, permettant d'alimenter directement à la demande des récipients de quelques litres tels que ceux de convertisseurs, conduisent à des pertes extrêmement importantes : on est en effet conduit à charger périodiquement des réservoirs dont la contenance dépasse le mètre cube en une phase liquide dont la teneur initiale en oxygène est égale ou légèrement inférieure à celle que l'on trouve dans l'atmosphère, et à rejeter le reliquat de phase liquide dès que la teneur en oxygène devient excessive.

Jusqu'ici, la constitution de quantités importantes d'air liquide a cependant été jugée nécessaire pour permettre de disposer d'une phase liquide de composition bien déterminée. L'évaporation dans les tuyauteries et le récipient, lors du refroidissement de ce dernier au cours du chargement, peut en effet conduire à des erreurs notables du fait que les quantités de gaz liquéfiés amenées ne sont plus représentatives de la concentration finale dans le récipient.

La présente invention vise à fournir un procédé et une installation permettant de charger un récipient de taille modérée, tels que ceux contenus dans les convertisseurs liquide-gaz portables ou embarquables, en air liquide ayant une composition bien déterminée, et cela à partir de réserve d'oxygène et d'azote liquides.

L'invention utilise pour cela la constatation que les masses d'azote et d'oxygène contenues sous forme gazeuse dans un récipient sont négligeables par rapport aux masses dans la phase liquide.

En conséquence il est possible, par pesée du récipient à des phases appropriées du chargement, de déterminer de façon précise les quantités d'azote et d'oxygène que contient finalement le récipient.

L'invention propose en conséquence un procédé de chargement d'un récipient en air liquide à partir de réservoirs d'oxygène liquide et d'azote liquide, suivant lequel :
- on alimente le récipient en oxygène liquide par une première canalisation, en même temps qu'on mesure sa masse, et on arrête l'alimentation lorsque le récipient contient la quantité prédéterminée d'oxygène liquide à obtenir,
- on refroidit une seconde canalisation, d'amenée d'azote liquide au récipient, en évacuant à l'atmosphère de l'azote vaporisé provenant de la phase liquide du réservoir d'azote à travers ladite seconde canalisation, et
- on sépare la seconde canalisation de l'atmosphère et on alimente le récipient en azote liquide par la seconde canalisation en même temps qu'on mesure la masse du récipient, et on arrête l'alimentation lorsque le réservoir contient la quantité d'azote liquide à obtenir.

Les proportions relatives d'azote et d'oxygène peuvent être très différentes dans la phase liquide et dans la phase gazeuse (où la teneur en azote est souvent beaucoup plus élevée) mais cela est sans conséquence à condition que le gaz respiratoire soit constitué à partir de la phase liquide, et non pas de la phase gazeuse, du récipient.

L'alimentation en oxygène et en azote liquide peut s'effectuer de façon simple par refoulement sous l'action de la pression de gaz au-dessus de la phase liquide dans les réservoirs. Cette surpression peut être créée par la phase gazeuse elle-même, en munissant les réservoirs d'une soupape tarée. Il est également possible d'exercer une surpression à l'aide d'un gaz inerte.

La température d'ébullition de l'azote à une pression déterminée étant inférieure à celle de l'oxygène, l'admission d'azote liquide, même avec une fraction d'azote gazeux, ne risque pas de provoquer une évaporation de l'oxygène déjà contenu dans le récipient qui modifierait la quantité déjà présente. L'évaporation d'azote est sans autre conséquence qu'une augmentation de la pression partielle d'azote dans la phase gazeuse du récipient.

L'invention propose également une installation permettant de mettre en oeuvre le procédé ci-dessus défini, comportant : une balance de réception de récipient à remplir, munie de moyens d'affichage et en général d'une interface permettant de fournir un signal, généralement numérique, de sortie représentatif de la masse du récipient ; une première canalisation munie d'une première électrovanne normalement fermée et d'une soupape de sécurité, reliant le fond du réservoir d'oxygène liquide à un connecteur de liaison avec le récipient ; une seconde canalisation munie d'une seconde électrovanne normalement fermée et d'une soupape de sécurité, reliant le fond du réservoir d'azote au connecteur de liaison avec le récipient ; et une troisième électrovanne permettant de faire circuler de l'azote du récipient vers l'atmosphère ; et des moyens de commande en séquence desdites électrovannes.

Des étranglements de limitation de débit sont avantageusement disposés sur les canalisations, pour éviter un déversement trop rapide en cas de défaut de fonctionnement d'une électrovanne ou une montée en pression rapide dans le récipient.

L'invention sera mieux comprise à la lecture de la description qui suit d'un mode particulier de réalisation, donné à titre d'exemple non-limitatif. La description se réfère aux dessins qui l'accompagnent, dans lesquels :
- la figure 1 est un schéma de principe d'une installation ;
- la figure 2 montre une répartition possible des différentes vannes et soupapes sur un chariot portant également la balance de réception du récipient à remplir.

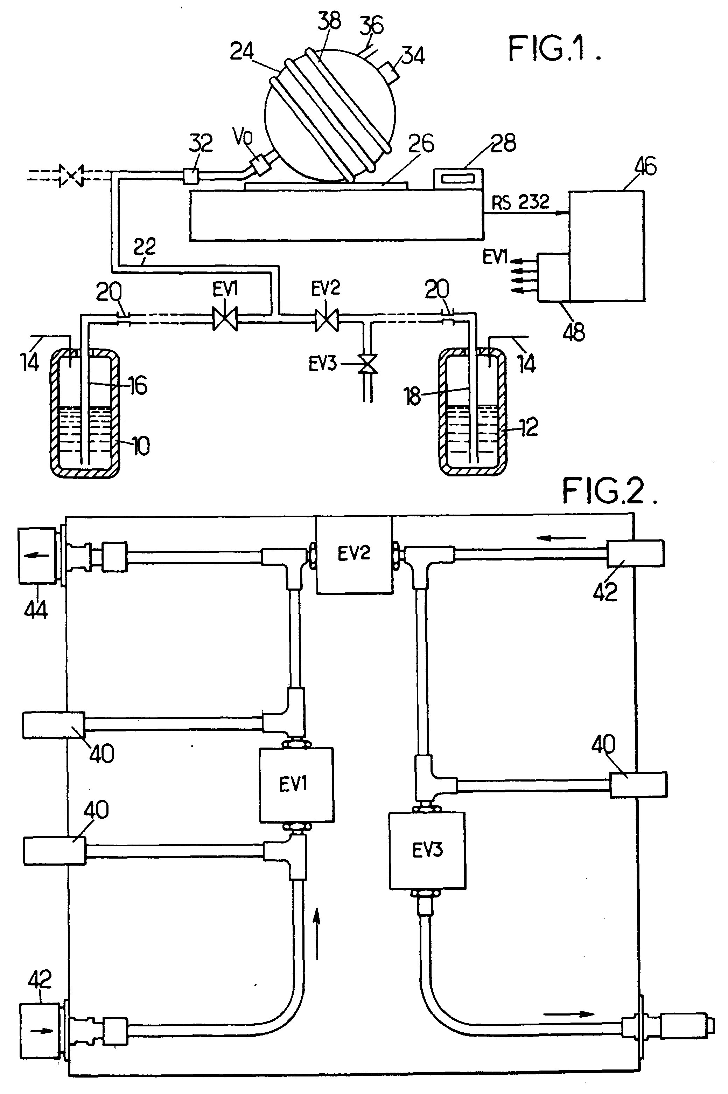

L'installation dont la constitution de principe est montrée en figure 1 comporte des réservoirs 10 et 12, thermiquement isolés, destinés à recevoir respectivement une réserve d'oxygène liquide et d'azote liquide. La pression qui s'exerce sur la surface libre est réglable, soit à l'aide d'une alimentation en gaz inerte, tel que l'hélium ou l'azote, par des conduites 14, soit simplement à l'aide de soupapes tarées. Des colonnes 16 et 18 relient le fond des réservoirs 10 et 12 à l'extérieur. Ces colonnes 16 et 18 communiquent, par l'intermédiaire d'étranglements calibrés 20, avec des conduites munies d'électrovannes respectives EV1 et EV2, fermées au repos. Ces conduites débouchent dans une conduite 22 destinée à être reliée à la vanne V0 d'admission du récipient 24 à remplir, reposant sur le plateau 26 d'une bascule munie d'un afficheur 28 et fournissant un signal de sortie 30 représentatif de la masse du récipient sur une sortie 30, par exemple sous forme d'un signal asynchrone conforme à la norme RS232. Les colonnes et les conduites constituent des canalisations respectives d'amenée d'oxygène et d'azote en phase liquide au récipient 24, qui a généralement une contenance de quelques litres.

Pour que la liaison entre les canalisations et l'électrovanne V0 du récipient 24 ne dégrade pas la sensibilité de la mesure, cette liaison sera généralement assurée par un tronçon souple 32.

Le récipient est par exemple celui d'un convertisseur liquide-gaz, muni d'une soupape de sécurité 34 et d'une sortie 36 pouvant être mise en communication avec le fond du récipient par un serpentin de vaporisation 38.

L'installation comporte de plus une électrovanne fermée au repos, permettant de laisser échapper à l'atmosphère de l'azote ayant parcouru la canalisation d'amenée d'azote lors d'une phase de refroidissement. Dans le mode de réalisation de la figure 1, cette électrovanne EV3 permet de relier à l'atmosphère un point 18 compris entre l'étranglement 20 et l'électrovanne EV2. Mais la mise à l'atmosphère pourrait être à d'autres emplacements, par exemple là où elle est indiquée en tirets sur la figure 1.

La figure 2 montre une disposition possible des différentes électrovannes de EV1 à EV3, dans un même plan horizontal et une disposition possible de soupapes de sécurité 40 de limitation de pression. Les différentes vannes et soupapes peuvent être portées par une même plaque appartenant à un chariot, à laquelle sont également fixés des connecteurs 42 de liaison avec les colonnes des réservoirs d'oxygène et d'azote liquide et un connecteur 44 de liaison avec la conduite 22.

Les divers tronçons de conduite montrés sur la figure 2 seront isolés de façon à limiter le réchauffement et il sera généralement avantageux de compléter l'étanchéité des raccords et connecteurs avec de la bande de polytétrafluoréthylène.

L'installation montrée en figure 1 peut être automatisée sans difficulté en la complétant par un automate programmable ou un micro-contrôleur 46 relié à la bascule, muni d'une horloge. Dans le cas d'un micro-contrôleur, ce dernier attaque une boîte à relais 48 de commande des différentes électrovannes.

L'automate ou le micro-contrôleur peuvent être programmés pour mettre en oeuvre le procédé qui sera maintenant décrit et dont les étapes successives devraient autrement être commandées manuellement. Dans l'état initial, toutes les électrovannes sont fermées.

En réponse au signal de départ, un test est effectué pour vérifier que le récipient à charger est vide. Ce test est constitué par la comparaison de la masse du récipient avec un seuil. Si le signal fourni par la balance indique une masse supérieure au seuil, l'opération est interrompue et un signal d'alarme est fourni.

Si le test donne un résultat favorable, le cycle de remplissage en oxygène liquide est déclanché. Le micro-contrôleur adresse à la boîte à relais 48 un ordre d'ouverture de l'électrovanne EV1 (la vanne V0 étant ouverte). Le remplissage progressif du réservoir est surveillé par le micro-contrôleur, à partir du signal fourni par la balance. Une fois la masse M1 atteinte, le micro-contrôleur envoie un ordre de fermeture à l'électrovanne EV1. Il faut remarquer que la quantité d'oxygène qui reste emprisonnée dans la canalisation est très faible.

L'opération suivante est constituée par le refroidissement de la canalisation d'amenée d'azote liquide au récipient. Pour cela le micro-contrôleur 46 envoie un ordre d'ouverture à l'électrovanne EV3. Un faible débit, fixé par l'étranglement placé en amont des électrovannes EV2 et EV3, s'écoule alors en se vaporisant vers l'atmosphère et amène la canalisation à la température de l'azote liquide. L'opération de refroidissement peut être effectuée pendant une durée prédéterminée, ou être commandée par un capteur thermomètrique.

Une fois la canalisation refroidie, le micro-contrôleur 46 transmet à la boîte à relais 48 un ordre de fermeture de l'électrovanne EV3, puis d'ouverture de l'électrovanne EV2, pour amener la masse du récipient à une valeur M1+M2 prédéterminée. L'électrovanne EV2 est alors fermée et un signal d'avertissement est émis pour indiquer qu'il est possible de séparer le récipient de l'installation, après fermeture de la vanne V0.

Une installation du genre ci-dessus définie peut être prévue pour charger des récipients de convertisseurs portables. La balance peut être prévue pour peser jusqu'à 30 kilos, avec une précision de l'ordre de la dizaine de grammes. Le micro-contrôleur peut être de type Motorola 68 HC11A8 et commandé, par l'intermédiaire d'une boîte à relais classique, des électrovannes ayant un diamètre de passage de 8 millimètres, choisies pour pouvoir fonctionner jusqu'à 200°C environ.

## Revendications

1. Procédé de chargement d'un récipient (24) en air liquide à partir de réservoirs (10, 12) d'oxygène liquide et d'azote liquide, suivant lequel :
- on alimente le récipient (24) en oxygène liquide par une première canalisation (16), en même temps qu'on mesure sa masse, et on arrête l'alimentation lorsque le récipient (24) contient la quantité prédéterminée d'oxygène liquide à obtenir,
- on refroidit une seconde canalisation (18), d'amenée d'azote liquide au récipient, en évacuant à l'atmosphère de l'azote vaporisé provenant de la phase liquide du réservoir d'azote à travers ladite seconde canalisation, et
- on sépare la seconde canalisation de l'atmosphère et on alimente le récipient (24) en azote liquide par la seconde canalisation en même temps qu'on mesure la masse du récipient, et on arrête l'alimentation lorsque le récipient contient la quantité d'azote liquide à obtenir.

2. Procédé selon la revendication 1, caractérisé en ce qu'on provoque le transfert de gaz liquéfiés par une pression de gaz au-dessus de la surface libre des gaz liquéfiés dans les réservoirs (10, 12).

3. Installation de chargement d'un récipient (24) en air liquide à partir de réservoirs (10,12) d'oxygène et d'azote liquides, comportant: une balance (26) de réception du récipient (24) à remplir, munie de moyens d'affichage et d'une interface fournissant un signal de sortie représentatif de la masse du récipient ; une première canalisation (16) munie d'une première électrovanne (EV1) normalement fermée et d'une soupape de sécurité, reliant le fond du réservoir d'oxygène (10) liquide à un connecteur de liaison avec le récipient ; une seconde canalisation munie d'une seconde électrovanne (EV2) normalement fermée et d'une soupape de sécurité, reliant le fond du réservoir d'azote (12) au connecteur de liaison avec le récipient ; une troisième électrovanne (EV3) permettant de faire circuler de l'azote du récipient vers l'atmosphère en refroidissant la canalisation d'azote et des moyens (46,48) de commande en séquence desdites électrovannes.

4. Installation selon la revendication 3, caractérisée en ce que lesdites canalisations sont munies d'étranglements (20) de limitation du débit.

5. Installation selon la revendication 3 ou 4, caractérisée en ce que lesdits moyens de commande sont constitués par un automate programmable ou par un micro-contrôleur (46) associé à une boîte à relais (48).

6. Installation selon la revendication 3, 4 ou 5, caractérisée en ce que ladite balance est prévue pour fournir un signal numérique de sortie.

7. Application du procédé selon la revendication 1 ou 2 au remplissage d'un récipient de convertisseur portable d'air liquide pour appareil individuel de survie ou de travail en atmosphère toxique ou contaminée.

## Patentansprüche

1. Verfahren zum Füllen eines Behälters (24) mit flüssiger Luft ausgehend von einem Vorratsbehälter (10) mit flüssigem Sauerstoff und einem Vorratsbehälter (12) mit flüssigem Stickstoff, gemäß welchem
- in den Behälter (24), dessen Masse gleichzeitig gewogen wird, durch eine erste Leitung (16) flüssiger Sauerstoff geleitet und die Zufuhr beendet wird, wenn der Behälter (24) die vorher festgelegte flüssige Sauerstoffmenge enthält,
- eine zweite Leitung (18), durch welche flüssiger Stickstoff in den Behälter geleitet wird, gekühlt wird, indem man verdampften Stickstoff, der aus der Flüssigphase des Stickstoffvorratsbehälters stammt, durch diese zweite Leitung in die Umgebung abläßt und
- die zweite Leitung von der Umgebung getrennt und durch sie in den Behälter (24) flüssiger Stickstoff geleitet, gleichzeitig die Masse des Behälters gewogen und die Zufuhr beendet wird, wenn er die zu erreichende flüssige Stickstoffmenge enthält.

2. Verfahren nach Anspruch 1, **dadurch gekennzeichnet, daß** der Transport der verflüssigten Gase durch einen Gasdruck über deren freier Oberfläche in den Vorratsbehältern (10, 12) bewirkt wird.

3. Vorrichtung zum Füllen eines Behälters (24) mit flüssiger Luft ausgehend von einem Vorratsbehälter (10) mit flüssigem Sauerstoff und einem Vorratsbehälter (12) mit flüssigem Stickstoff, welche eine Aufnahmewaage (26) für den zu füllenden Behälter (24), die mit Anzeigemitteln und einer Schnittstelle, welche ein für die Behältermasse repräsentatives Ausgangssignal liefert, ausgerüstet ist, eine erste Leitung (16), die mit einem normalerweise geschlossenen ersten Elektroventil (EV1) und einem Sicherheitsventil versehen ist und den Boden des Vorratsbehälters (10) für den flüssigen Sauerstoff über einen Verbindungsanschluß mit dem Behälter verbindet, eine zweite Leitung, die mit einem normalerweise geschlossenen zweiten Elektroventil (EV2) und einem Sicherheitsventil versehen ist und den Boden des Stickstoffvorratsbehälters (12) über Verbindungsanschlüsse mit dem Behälter verbindet, ein drittes Elektroventil (EV3), durch das der Stickstoff des Vorratsbehälters in die Umgebung strömen kann, wobei er die Stickstoffleitung abkühlt, und Ablaufsteuerungsmittel (46, 48) für diese Elektroventile umfaßt.

4. Vorrichtung nach Anspruch 3, **dadurch gekennzeichnet, daß** die Leitungen mit Drosseln (20) zur Durchflußbegrenzung versehen sind.

5. Vorrichtung nach Anspruch 3 oder 4, **dadurch gekennzeichnet, daß** die Steuerungsmittel aus einem programmierbaren Automaten oder einer mit einem Relaisgehäuse (48) verbundenen Mikrosteuerung (46) bestehen.

6. Vorrichtung nach Anspruch 3, 4 oder 5, **dadurch gekennzeichnet, daß** die Waage ein digitales Ausgangssignal liefert.

7. Anwendung des Verfahrens nach Anspruch 1 oder 2 zum Füllen eines tragbaren Erzeugungsbehälters für flüssige Luft für ein persönliches Rettungs- bzw. Arbeitsgerät in giftiger oder kontaminierter Atmosphäre.

## Claims

1. A process for filling a vessel (24) with liquid air from tanks (10, 12) of liquid oxygen and liquid nitrogen, including the steps of:
- feeding the vessel (24) with liquid oxygen using a first pipe (16)and at the same time measuring the mass thereof and stopping feeding when the vessel (24) contains the predetermined quantity of liquid oxygen to be obtained,
- cooling a second pipe (18) for delivery of liquid nitrogen to the vessel, by evacuating vaporized nitrogen originating from the liquid phase of the nitrogen tank to atmosphere through said second pipe, and
- separating the second pipe from atmosphere and feeding the vessel (24) with liquid nitrogen through the second pipe and simultaneously measuring the mass of the vessel and stopping delivery when the vessel contains the liquid nitrogen quantity to be obtained.

2. Process according to claim 1, characterized in that transfer of liquid gases are caused by a gas pressure above the free surface of the liquid gases in the tanks (10, 12).

3. A system for loading a vessel (24) with liquid air from tanks (10, 12) of liquid oxygen and nitrogen, comprising: a weighing machine (26) for receiving the vessel (24) to be filled, provided with display means and with an interface delivering an output signal which represents the mass of the vessel; a first pipe (16) provided with a first electrically actuated valve (EV1) which is closed at rest and a safety valve connecting the bottom of the liquid oxygen tank (10) to a connector for connection with the bottom vessel; a second pipe provided with a second electrically actuated valve (EV2) which is closed at rest and with a safety valve connecting the bottom of the nitrogen reservoir (12) to a connector for connection with the vessel; a third electrically actuated valve (EV3) for circulating nitrogen from the vessel to atmosphere while cooling the nitrogen pipe means (46, 48) for sequentially controlling said electrically actuated valves.

4. System according to claim 3, characterized in that said pipes are provided with throttles (20) for limiting the flow rate.

5. System according to claim 3 or 4, characterized in that said control means consist of a programmable controller or a micro-controller (46) associated with a relay box (48).

6. System according to claim 3, 4 or 5, characterized in that said weighing machine is arranged for delivering a digital output signal.

7. Application of the process according to claim 1 or 2 to filling of a vessel of a portable liquid air converter for an individual unit for survival or for work in a noxious or contaminated atmosphere.
